# EUROPEAN PATENT APPLICATION

(11) **EP 2 532 473 A1**
(43) Date of publication of application: **12.12.2012**
(21) Application number: 12166559.0
(22) Date of filing: 03.05.2012
(51) Int. Cl.: B23P 9/00, C21D 7/12, F02M 55/02

(54) **Sealing system and sealing method**

(30) Priority: 08.06.2011 JP 2011128289
(71) Applicant: DENSO CORPORATION, Kariya-city, Aichi-pref. 448-8661 (JP)
(72) Inventor: Niinuma, Kenichi, Aichi-pref., 448-8661 (JP); Oohashi, Fumio, Aichi-pref., 448-8661 (JP); Inoue, Tomonori, Aichi-pref., 448-8661 (JP)
(74) Representative: Kuhnen & Wacker

(57) **Abstract**

A sealing system which is provided with a pumping means (11) for pumping a fluid to the inside of a workpiece (1), a seal material (12) which is inserted into an opening hole (1a) of the workpiece (1) and which suppresses leakage of the fluid from the opening hole (1a), and detachment preventing means (13,14) for preventing the seal material (12) from detaching from the opening hole (1a), wherein the seal material (12) has a tubular part (12a) which opens at a front end side which is inserted into the opening hole (1a), and the tubular part (12a) is formed so as to elastically deform in an expanding direction when the inside pressure at the inside of the workpiece (1) rises due to pumping of the fluid, and a sealing method using the same.

## Description

### Technical Field

The present invention relates to a sealing system and sealing method which suppress leakage of high pressure fluid from the inside of a workpiece.

### Background Art

In recent years, demand has arisen for autofrettage of various pressure resistant parts. "Autofrettage" is processing which seals a workpiece and applies a high inside pressure in that state so as to leave residual stress in the structure of the workpiece and thereby raise the strength. At the time of autofrettage, a sealing system has to be used. WO2008/05849 discloses one example of a sealing system which seals a workpiece by pressing a cone-shaped sealing tip against the opening edge of the workpiece.

However, in the related art of the above WO2008/058494, the opening edge of the workpiece becomes the sealing position, so the range to which the inside pressure is applied ends up becoming broader. As a result, parts with insufficient strength fracture due to the inside pressure, the processing precision ends up deviating from the demanded dimensional precision, and other such trouble easily occur.

When setting the sealing position at the inside of the workpiece, a seal material is press-fit in the opening hole of the workpiece so as to seal the hole, the seal material which is inserted into the opening hole of the workpiece is made to expand inside of the workpiece by pressing so as to cause the hole to be sealed tight, or other means may be considered. When using these means, the seal material ends up plastically deforming, so the seal material cannot be repeatedly used.

### Summary of the Invention

The present invention, in consideration of the above point, provides a sealing system and sealing method which enable repeated use of the seal material which is inserted inside of the workpiece.

To achieve the above object, in the aspect of the invention which is described in claim 1, there is provided a sealing system which is provided with a pumping means (11) for pumping a fluid to the inside of the workpiece (1), a seal material (12) which is inserted into an opening hole (1a) of the workpiece (1) and which suppresses leakage of the fluid from the opening hole (1a), and a detachment preventing means (13, 14) for preventing the seal material (12) from detaching from the opening hole (1a), wherein the seal material (12) has a tubular part (12a) which opens at a front end side which is inserted into the opening hole (1a), and the tubular part (12a) is formed so as to elastically deform in an expanding direction when the inside pressure at the inside of the workpiece (1) rises due to pumping of the fluid.

According to this, if the inside pressure of the workpiece (1) rises, the tubular part (12a) of the seal material (12) deforms in an expanding direction, so the seal material (12) which is inserted to the inside of the workpiece (1) can suppress leakage of fluid. Furthermore, the deformation of the seal material (12) is elastic deformation, so the seal material (12) can be repeatedly used.

In the aspect of the invention which is described in claim 2, there is provided the aspect of the invention **characterized in that** an inside wall surface of the tubular part (12a) is provided with a rounded shape for avoiding stress concentration.

Due to this, the durability of the seal material (12) with respect to inside pressure can be raised.

In the aspect of the invention which is described in claim 3, there is provided the aspect of the invention **characterized in that** the tubular part (12a) is provided with a thin part (12b) for facilitating expansion due to the inside pressure at the inside of the workpiece (1).

Due to this, the sealing ability of the seal material (12) can be improved.

In the aspect of the invention which is described in claim 4, there is provided the aspect of the invention **characterized in that** tubular part (12a) is provided with a tapered part (12c) for facilitating insertion into the opening hole (1a).

Due to this, even if the clearance between the seal material (12) and the opening hole (1a) is made small, it is possible to keep the seal material (12) from becoming hard to insert into the opening hole (1a).

In the aspect of the invention which is described in claim 5, there is provided the aspect of the invention **characterized in that** the outer circumference of the seal material (12) is provided with a roughened part (12d) for making the flow resistance of the fluid increase.

Due to this, it is possible to keep fluid from flowing into the clearance with the opening hole (1a) before the seal material (12) elastically deforms, so it is possible to promote a rise in the inside pressure of the workpiece (1) so as to enable reliable elastic deformation of the seal material (12).

In the aspect of the invention which is described in claim 6, there is provided a sealing method which uses the aspect of the invention which is described in any one of claims 1 to 5 characterized by comprising a step of inserting said seal material (12) into said opening hole (1a), a step of pumping means (11), while preventing said seal material (12) from detaching from said opening hole (1a) by said detachment preventing means (13, 14), and a step of raising the inside pressure at the inside of said workpiece (1) and deforming said tubular part (12a) elastically in an expanding direction of said tubular part (12a) by pumping of said fluid.

In the above, the explanation was given of the case of viewing the present invention as an invention of a sealing system and a sealing method, but the present invention can also be viewed as an invention of an autofrettage system and an autofrettage method. Further, the present invention can also be viewed as an invention of a system for manufacture of a common rail and a method of manufacture of a common rail.

### Brief Description of Drawings

FIG. 1 is a cross-sectional view which shows an autofrettage system in a first embodiment.

FIGS. 2A and 2B are cross-sectional views which explain a process of autofrettage in the first embodiment.
FIG. 3 is a cross-sectional view of a seal pin in a second embodiment.
FIG. 4 is a cross-sectional view of a seal pin in a third embodiment.
FIG. 5 is a cross-sectional view of a seal pin in a fourth embodiment.

### Description of Embodiments

### First Embodiment

Below, a first embodiment will be explained. In the present embodiment, the example of autofrettage of a component of a common rail which is used in a diesel engine will be explained.

A workpiece 1 has a straight through hole 1a (opening hole) and a horizontal hole 1b which perpendicularly intersects the through hole 1a. In the present example, the through hole 1a and the horizontal hole 1b are circular in cross-sectional shapes.

The autofrettage system is a system for autofrettage of the workpiece 1 and is provided with a high pressure pump 11, a seal pin 12, a seal pin holder 13, a hydraulic cylinder 14, and a cap 15.

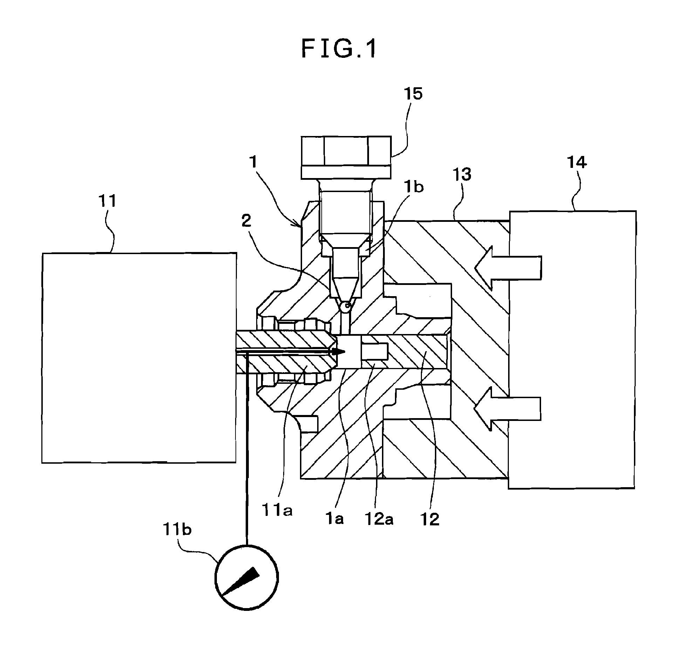

The high pressure pump 11 is a pumping means for pumping autofrettage fluid (working oil) to the inside of a workpiece 1 and has a discharge nozzle 11a which may be inserted into one end of the through hole 1a of the workpiece 1 (left end in FIG. 1).

The discharge nozzle 11a is formed with a tapered part or a stepped part. The tapered part or stepped part of the discharge nozzle 11a is designed to abut against a tapered part or stepped part which is formed at the through hole 1a of the workpiece 1.

The pressure of the autofrettage fluid which the high pressure pump 11 pumps is designed to be measured by a manometer 11b.

The seal pin 12 is a seal material which suppresses leakage of autofrettage fluid from the other end of the through hole 1a of the workpiece 1 (right end in FIG. 1) and is inserted into the other end of the through hole 1a. In this example, the seal pin 12 is formed by a metal.

The outside diameter of the seal pin 12 is preferably the same as the inside diameter of the through hole 1a of the workpiece 1, but variation (error) in processing of the through hole 1a of the workpiece 1 is unavoidable, so the outside diameter of the seal pin 12 is designed to be just a bit smaller than the inside diameter of the through hole 1a of the workpiece 1.

The seal pin 12 has a tubular part 12a which opens toward the front end side of insertion (left end side of FIG. 1). The tubular part 12a is formed so as to elastically deform in the direction expanding outward in the diametrical direction when the inside pressure of the workpiece 1 rises due to pumping of the autofrettage fluid (i.e., in the direction closely contacting inner wall of through hole 1a).

The seal pin holder 13 and hydraulic cylinder 14 are detachment preventing means for preventing the seal pin 12 from detaching from the through hole 1a of the workpiece 1. The seal pin holder 13 is arranged so as to plug the through hole 1a. The hydraulic cylinder 14 pushes the seal pin holder 13 to the workpiece 1 side. By the hydraulic cylinder 14 pushing the seal pin holder 13, the workpiece 1 is pushed against the discharge nozzle 11a.

The cap 15 suppresses leakage of the autofrettage fluid from the horizontal hole 1b of the workpiece 1. Specifically, the cap 15 is cut with a male thread and is formed with a tapered part or a stepped part. The male thread of the cap 15 is fastened with a female thread of the horizontal hole 1b. As a result, the tapered part or the stepped part of the cap 15 is pressed against the tapered part or stepped part of the horizontal hole 1b for sealing. The front end of the cap 15 may also be sealed by pressing a ball against the tapered part of the horizontal hole 1b.

Next, an autofrettage method using the above autofrettage system (sealing method) will be explained. First, the horizontal hole 1b of the workpiece 1 is closed by the cap 15. Due to this, the horizontal hole 1b of the workpiece 1 is sealed utilizing the tapered part or the stepped part.

Next, the seal pin 12 is set (inserted) into the through hole 1a of the workpiece 1, then the workpiece 1 is set between the high pressure pump 11 and the seal pin holder 13. The discharge nozzle 11a of the high pressure pump 11 is inserted into one end of the through hole 1a of the workpiece 11, the seal pin holder 13 closes the other end of the through hole 1a of the workpiece 1, and the hydraulic cylinder 14 presses down the seal pin holder 13.

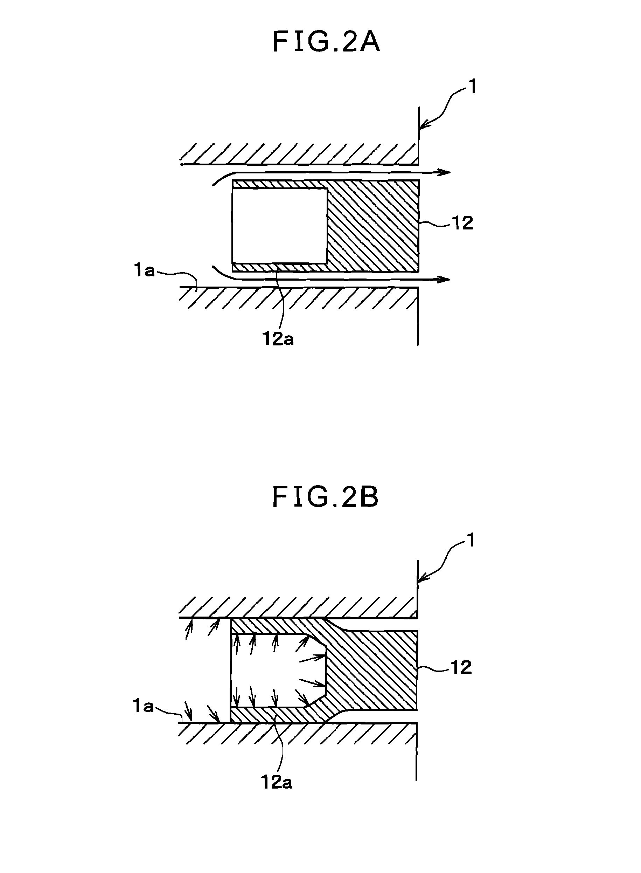

Next, the high pressure pump 11 is used to pump the autofrettage fluid to the inside of the workpiece 1. At this time, as shown in FIG. 2A, the slight clearance present between the outer circumference of the seal pin 12 and the inner circumference of through hole 1a of the workpiece 1 leaks autofrettage fluid, but by feeding the autofrettage fluid faster than the leakage from the clearance, the inside pressure of the workpiece 1 can be made to rise. This feed rate of the autofrettage fluid can be calculated from the dimensions of the clearance between the seal pin 12 and through hole 1a, the viscosity of the autofrettage fluid, etc.

Due to the rise in the inside pressure of the workpiece 1, as shown in FIG. 2B, a pressure difference arises between the inside and the outside of the seal pin 12. Due to this pressure difference, the tubular part 12a of the seal pin 12 elastically deforms in an expanding direction whereby it closely contacts the inner circumference of the through hole 1a of the workpiece 1. Due to this, the flow of the autofrettage fluid is stemmed and a sufficient seal is obtained.

When the inside pressure of the workpiece 1 rises to a predetermined pressure which is required for autofrettage (for example, an ultrahigh pressure of 500 MPa or more), the high pressure pump 11 is operated in reverse to make the inside pressure drop. After the drop of the inside pressure, the seal pin 12 returns to its original shape. In this way, the workpiece 1 can be processed by autofrettage.

According to the present embodiment, if the inside pressure of the workpiece 1 rises, the tubular part 12a of the seal pin 12 deforms in an expanding direction, so the seal pin 12 which is inserted inside of the workpiece 1 can be used to suppress leakage of the autofrettage fluid. Furthermore, the deformation of the seal pin 12 is elastic deformation, so the seal pin 12 can be repeatedly used.

The seal pin 12 can be freely set in sealing position inside of the workpiece so long as it is able to be inserted into the inside of the workpiece 1. For this reason, parts with sections which are weak strengthwise or parts from which high precision is demanded can be easily processed by autofrettage since the sealing position can be suitably set inside of the workpiece.

### Second Embodiment

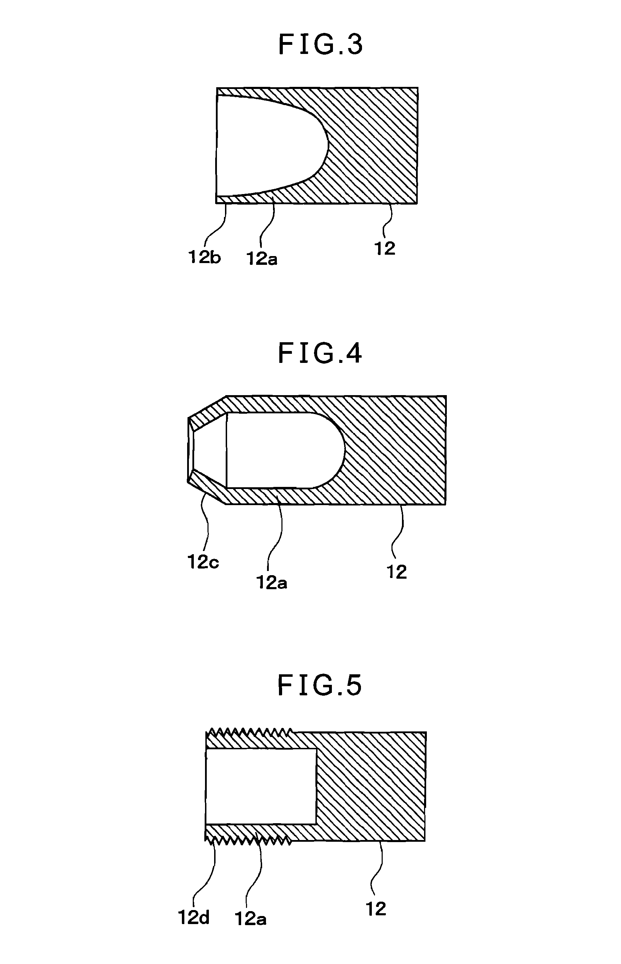

In the second embodiment, the tubular part 12a of the seal pin 12 is made a shape which is easy to deform and is durable. Specifically, as shown in FIG. 3, the inner wall surface of the tubular part 12a of the seal pin 12 is rounded to avoid stress concentration. Further, the tubular part 12a of the seal pin 12 is formed with a thin part 12b to enable easy expansion.

### Third Embodiment

In this third embodiment, the seal pin 12 is shaped for easy insertion into the through hole 1a even if the clearance with the through hole 1a is extremely small. Specifically, as shown in FIG. 4, the frontmost end of the tubular part 12a of the seal pin 12 is formed with a tapered part 12c to facilitate insertion into the through hole 1a.

### Fourth Embodiment

In this fourth embodiment, the shape of the seal pin 12 is set so that before the seal pin 12 elastically deforms, the autofrettage fluid does not easily flow into the clearance with the through hole 1a. Specifically, as shown in FIG. 5, the outer circumference of the seal pin 12 is formed with a roughened part 12d with large surface roughness.

According to this, the roughened part 12d cause an increase in the flow resistance of the autofrettage fluid at the clearance, so it is possible to promote a rise in the inside pressure of the workpiece 1 and reliably enable elastic deformation of the seal pin 12.

### Other Embodiments

Note that the above embodiments may be suitably combined.

Further, in the above embodiments, the explanation was given with reference to an example of application of the present invention to sealing when performing autofrettage on a component of a common rail, but the invention is not limited to this. The present invention can be widely applied to sealing of various workpieces.

## Claims

**1.**
A sealing system which is provided with
a pumping means (11) for pumping a fluid to the inside of the workpiece (1),
a seal material (12) which is inserted into an opening hole (1a) of said workpiece (1) and which suppresses leakage of said fluid from said opening hole (1a), and
detachment preventing means (13, 14) for preventing said seal material (12) from detaching from said opening hole (1a), wherein
said seal material (12) has a tubular part (12a) which opens at a front end side which is inserted into said opening hole (1a), and
said tubular part (12a) is formed so as to elastically deform in an expanding direction when the inside pressure at the inside of said workpiece (1) rises due to pumping of said fluid.

**2.**
A sealing system as set forth in claim 1 **characterized in that** an inside wall surface of the tubular part (12a) is provided with a rounded shape for avoiding stress concentration.

**3.**
A sealing system as set forth in claim 1 or 2 **characterized in that** the tubular part (12a) is provided with a thin part (12b) for facilitating expansion due to the inside pressure at the inside of the workpiece (1).

**4.**
A sealing system as set forth in any one of claims 1 to 3 **characterized in that** the tubular part (12a) is provided with a tapered part (12c) for facilitating insertion into said opening hole (1a).

**5.**
A sealing system as set forth in any one of claims 1 to 4 **characterized in that** the outer circumference of the seal material (12) is provided with a roughened part (12d) for making the flow resistance of the fluid increase.

**6.**
A sealing method which uses a sealing system as set forth in any one of claims 1 to 5 **characterized by** comprising
a step of inserting said seal material (12) into said opening hole (1a),
a step of pumping fluid to the inside of said workpiece (1) by said pumping means (11), while preventing said seal material (12) from detaching from said opening hole (1a) by said detachment preventing means (13, 14), and
a step of raising the inside pressure at the inside of said workpiece (1) and deforming said tubular part (12a) elastically in an expanding direction of said tubular part (12a) by pumping of said fluid.
